(19) Europäisches Patentamt
European Patent Office
Office européen des brevets

(11) **EP 2 365 280 B1**

(12) **EUROPÄISCHE PATENTSCHRIFT**

(45) Veröffentlichungstag und Bekanntmachung des Hinweises auf die Patenterteilung:
**09.04.2014  Patentblatt 2014/15**

(51) Int Cl.:
***G01B 11/24*** *(2006.01)*

(21) Anmeldenummer: **10155009.3**

(22) Anmeldetag: **01.03.2010**

(54) **Verfahren zur optischen Messung von Schienen**

Optical measurement of rails

Procédé de mesure optique de rails

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**14.09.2011  Patentblatt 2011/37**

(73) Patentinhaber: **ZUMBACH ELECTRONIC AG CH-2552 Orpund (CH)**

(72) Erfinder: **Subirats, Ignasi Bacardit 08023, Barcelona (ES)**

(74) Vertreter: **Köster, Hajo propindus Patentanwälte Niedmers Jaeger Köster Pippinplatz 4a 82131 Gauting (DE)**

(56) Entgegenhaltungen:
**DE-A1- 4 401 020      GB-A- 2 138 562
JP-A- 56 117 107      US-A- 4 404 684
US-A- 5 563 808**

**Beschreibung**

Die Erfindung betrifft ein Verfahren zur optischen Bestimmung sowie Berechnung von Geometriedaten von Schienen mit einem Schienenkopf und einem Schienenfuß sowie mit einem diese verbindenden Schienensteg, bei dem die Schiene mit Hilfe einer Messvorrichtung, die

> i. mit einem lichtempfindlichen Sensor und
> ii. mit einer Lichtquelle ausgestattet ist, die auf die Schiene gerichtet ist und einen vollständig innerhalb des Messbereichs des Sensors liegenden, von zwei Schattenkanten begrenzten, in einer Messebene, zu der die Längsachse der Schiene die Normale bildet, liegenden Schatten wirft, und die
> iii. in der Messebene auf einem Kreis um die Schiene um einen Winkelbereich drehbar ist,

vermessen wird.

Bei länglichen Produkten, die durch Strangpressen oder durch Walzen hergestellt werden, insbesondere in Walzstraßen, ist es häufig wünschenswert und/oder erforderlich, die erhaltenen Produkte direkt am Ort der Herstellung und somit am Ausgang der Einrichtung, die Ihnen die definitive Form gibt, insbesondere am Ende einer Walzstraße, zu vermessen und die relevanten Geometriedaten zu bestimmen.

Anhand der ermittelten Geometriedaten können dann die Herstellungseinrichtungen, beispielsweise die Walzen von Walzstraßen gesteuert und geregelt werden.

Die GB 2 138 562 A beschreibt eine Vorrichtung und ein Verfahren zur Vermessung des Profils eines länglichen, in einem Extrusionsverfahren hergestellten Produkts , insbesondere eines Kabels. Dabei wird das Produkt mit einem Lichtstrahl gescannt. Mit Hilfe einer Photozelle wird die Dicke des Objektes bestimmt,

Aus der EP 1 154 226 A (und auch JP 56 117107 A) ist eine Vorrichtung und ein Verfahren zur Messung von Durchmesser und Unrundheit von in Ihrer Längsrichtung vorbewegten Rundprodukten an Walzstraßen bekannt. Diese Messeinrichtung ist hinter dem letzten Walzgerüst angeordnet und misst kontinuierlich den Durchmesser und die Unrundheit der Rundprodukte.

Diese bekannte Messeinrichtung besitzt drei oder mehr Laserscanner, die je einen lichtempfindlichen Sensor und einen Laser aufweisen, der zur Beleuchtung eines Bereichs des Sensors auf diesen ausgerichtet ist, wobei das Rundprodukt einen vollständig innerhalb des ausgeleuchteten Bereich des Sensors liegenden Schatten wirft. Dabei werden Schattenkanten erzeugt, aus denen jeweils eine an der Außenkante des Rundproduktes anliegende Gerade berechnet wird, die parallel zu dem Laserstrahl verläuft. Aus drei derartigen Geraden werden die gewünschten Geometriedaten berechnet.

Ein verbessertes Verfahren zur Rundheitsmessung von Rundprofilen ist in der WO 20081122385 A3 beschrieben, bei dem ebenfalls Schattenkanten erzeugt und daraus die gewünschten Geometriedaten errechnet werden.

Die in den beiden letztgenannten Druckschriften beschriebenen Laserscanner können auch für das erfindungsgemäße Verfahren eingesetzt werden.

Aus der DE 44 010 20 ist ein Verfahren zur Abmessungs-kontrolle des Profils von langen Produkten und insbesondere zur Kontrolle von Schienen beschrieben. Bei diesem Verfahren zur optischen Kontrolle des Profilquerschnitts eines langen Produktes wird das Profil transversal durch ein Laserbündel mit vorbestimmtem Einfallswinkel beleuchtet. Dann wird wenigstens ein Bild des Schnittes gebildet. Das Profil wird durch Analyse des Bildes und Modelisation unter Berücksichtigung des Einfallswinkels der Aufnahme rekonstruiert. Dieses Verfahren zeichnet sich dadurch aus, dass man das Bündel entlang des Profils dynamisch fokussiert.

Letzteres Verfahren, das auch als Lichtschnitt-Verfahren bezeichnet werden kann, hat verschiedene Nachteile. So ist die Messeinrichtung für ein derartiges Verfahren teuer. Die Messrate ist tief, denn es können nur einige Bilder pro Sekunde ausgewertet werden. Die absolute Genauigkeit ist gering.

Aufgabe der vorliegenden Erfindung ist es, ein genaueres Verfahren mit einer höheren Messrate zur Verfügung zu stellen.

Gelöst wird diese Aufgabe durch ein Verfahren gemäß der Lehre des Anspruchs 1.

Ein derartiges Verfahren kann auch als Verfahren zur Schattenmessung bezeichnet werden. Vorzugsweise kommen dabei Laser zur Anwendung. Es ist jedoch auch möglich, dieses Verfahren mit anderen Lichtquellen durchzuführen. Der Einfachheit halber wird jedoch nachstehend lediglich auf Laser abgestellt. Die entsprechenden Ausführungen gelten jedoch auch für andere Lichtquellen.

Bei dem erfindungsgemäßen Verfahren wird ein per se bekannte Messvorrichtung eingesetzt, die mit einem lichtempfindlichen Sensor und mit einer Lichtquelle ausgestattet ist, welche auf die zu vermessende Schiene gerichtet ist und einen vollständig innerhalb des Messbereichs des Sensors liegenden, von zwei Schattenkanten begrenzten, in einer Messebene liegenden Schatten wirft. Diese Messvorrichtung wird in der Messebene auf einem Kreis um die Schiene um einen Winkelbereich gedreht.

Obwohl es nicht zwingend erforderlich ist, bildet die Längsachse der Schiene die Normale zu der Messebene.

Diese per se bekannte Messvorrichtung dient zur optischen Vermessung und Bestimmung von Geometriedaten der Schiene.

Das erfindungsgemäße Verfahren zeichnet sich dadurch aus, dass der Abstand D der beiden Schattenkanten für mehrere Winkelstellungen $\alpha$ bestimmt wird. Aus diesen, für mehrere Winkelstellungen $\alpha$ erhaltenen Daten für die Abstände D und für die Winkelstellungen $\alpha$ wird eine Kurve erzeugt, in der die Abstände D gegen die Winkelstellungen $\alpha$ aufgetragen werden. Aus den Minima, Maxima und Unstetigkeiten der erhaltenen Kurve werden vorzugsweise die folgenden Geometriedaten bestimmt bzw. berechnet: B = Breite des Schienenfußes, H = Höhe der Schiene, S = Verschiebung bzw. Verkippung und K = Breite des Schienenkopfes.

Die Daten für die Abstände D und für die Winkelstellungen $\alpha$ werden vorzugsweise einer Auswerteeinrichtung zugeführt, welche die Kurve und die sich daraus ergebenden Geometriedaten berechnet. Derartige Auswerteeinrichtungen sind bekannt und benötigen daher keiner weiteren Erläuterungen.

Beim erfindungsgemäßen Verfahren ist es ausreichend, nur eine Messvorrichtung zur Anwendung zu bringen. Allerdings können - und dies ist bevorzugt - zwei oder mehrere Messvorrichtungen eingesetzt werden. Im Falle von zwei Messvorrichtungen werden diese vorzugsweise um 90° zueinander verdreht angeordnet.

Im Falle von nur einer Messvorrichtung wird diese in der Messebene vorzugsweise entweder kontinuierlich um die Schiene herum oder oszillierend um einen Winkelgrad von mindestens $\alpha$ = - 90° bis mindestens $\alpha$ = + 90° und somit um mindestens 180° gedreht.

Wenn hier von einem Winkelbereich von mindestens $\alpha$ = - 90° bis mindestens $\alpha$ = + 90° die Rede ist, dann fällt der Winkel von $\alpha$ = 0° vorzugsweise mit der Längsmittelebene der Schiene zusammen. Mit anderen Worten, der Winkel $\alpha$ vom Ursprung O des Schienenfußes und somit der Basis in Richtung des Schienenkopfes steht senkrecht auf einer durch den Ursprung O gehenden Längsachse. Zudem dient diese Angabe lediglich Erläuterungszwecken. Es kommt nur darauf an, dass die nur eine Messvorrichtung bei oszillierender Drehung um einen Winkelbereich von mindestens 180° hin- und hergedreht wird. Der Einfachheit halber liegt $\alpha$ = 0° in der Längsmittelebene.

Durch den Ausdruck "mindestens" bei den oben wiedergegebenen Winkelwerten soll zum Ausdruck gebracht werden, dass der Beginn und das Ende dieses Winkelbereichs im Prinzip beliebig gewählt werden können. Es ist lediglich erforderlich, dass ein Winkelbereich von mehr als 180° überstrichen wird, um sicherzustellen, dass sich die einzelnen Messbereiche überlappen und keine Messlücken entstehen.

Im Falle von zwei um 90° zueinander verdreht angeordneten Messvorrichtungen werden diese ebenfalls entweder um die Schiene herum oder jeweils oszillierend um einen Winkelbereich von mindestens $\alpha$ = 0° bis mindestens $\alpha$ = + 90° bzw. mindestens $\alpha$ = - 90° bis mindestens $\alpha$ = 0° und somit mindestens um 90° hin- und hergedreht. Das Drehen der beiden Messvorrichtungen erfolgt vorzugsweise synchron. Bezüglich des Ausdrucks "mindestens" gilt das oben Gesagte sinngemäß.

Das erfindungsgemäße Verfahren wird vorzugsweise in einer Walzstraße und weiterhin bevorzugt am Ende einer Walzstraße durchgeführt. Die dabei ermittelten und berechneten Geometriedaten werden zur Steuerung und Regelung der Walzstraße eingesetzt.

Das erfindungsgemäße Verfahren wird vorzugsweise bei in ihrer Längsrichtung vorbewegten Schienen durchgeführt. Dieses Verfahren wird nachstehend unter Bezug auf die sogenannte Vignolschiene erläutert. Diese Schiene steht jedoch für alle Arten von Schienen, beispielsweise für eine Rillenschiene. Auch Rillenschienen können nach dem erfindungsgemäßen Verfahren optisch vermessen werden.

Das erfindungsgemäße Verfahren ist genauer als das bisher bekannte Verfahren zur Kontrolle von Schienen, das eingangs beschrieben wurde. Dies gilt insbesondere für den Fall, dass als Lichtquelle ein Laser zur Anwendung gebracht wird.

Zudem ist die Messeinrichtung zur Durchführung des erfindungsgemäßen Verfahrens unkritisch in der Montage. Weiterhin erlaubt das erfindungsgemäße Verfahren hohe Messraten von bis zu 20.000 Scans pro Sekunde. Ferner ist das erfindungsgemäße Verfahren preisgünstig, benötigt keine nachträgliche Kalibration und lässt sich einfach programmieren.

Die Erfindung wird nachstehend unter Bezug auf schematische und nicht maßstabsgetreue Zeichnungen näher erläutert. Von den Zeichnungen zeigen:

Fig. 1      eine schematische Ansicht zweier um 90° zueinander verdrehter Messeinrichtungen aus jeweils einem Laser und einem Sensor zur optischen Bestimmung sowie Berechnung von Geometriedaten einer Vignolschiene,

Fig. 2      eine Schnittansicht einer Vignolschiene mit den insbesondere interessierenden Maßen,

Fig. 3      die sich bei Durchführung des erfindungsgemäßen Verfahren ergebenden Schattenkanten bzw. Abstände D bei verschiedenen Winkelstellungen $\alpha$,

Fig. 4          eine Kurve, in der die Abstände D bei verschiedenen Winkelstellungen α aufgetragen sind und

Fig. 5 und 6    der in der Fig. 2 gezeigten Ansicht in etwa entsprechende Ansichten zur Erläuterung der händischen Messung einer Verschiebung bzw. einer Verkippung mit Hilfe einer Schablone.

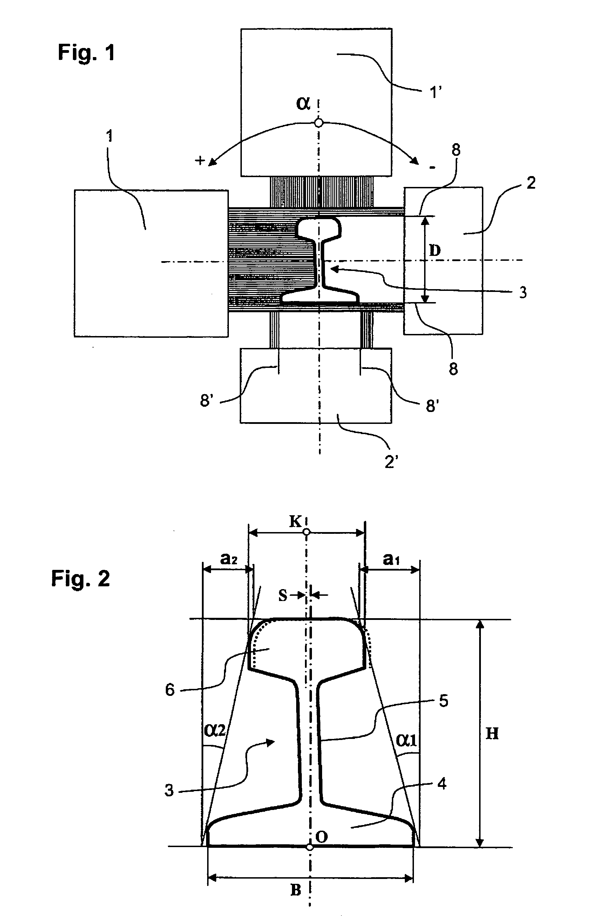

Die in der Fig. 2 gezeigte Vignolschiene besitzt einen Schienenfuß 4, eine Schienensteg 5, und einen Schienenkopf 6.

Die hier insbesondere interessierenden Maße bzw. Werte (Geometriedaten) sind in der Fig. 2 ebenfalls dargestellt. Es handelt sich dabei um folgende:

B = Breite des Schienenfußes
H = Höhe der Schiene
S = Verschiebung bzw. Verkippung
K = Breite des Schienenkopfes.

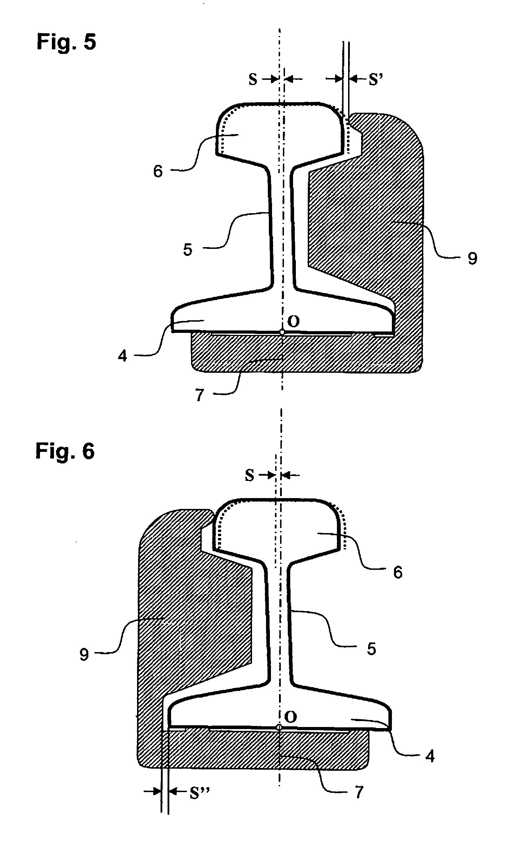

Es dürfte einleuchtend sein, dass nur dann die Lauffläche des Schienenkopfes gegenüber der Basis ausgerichtet ist, wenn oben genannte Werte bzw. Maße innerhalb bestimmter Toleranzen liegen. In der Figur 2 und auch in den Figuren 5 und 6 ist die gewünschte Lage des Schienenkopfes 6 im übrigen mit einer gepunkteten Linie dargestellt, während die zu korrigierende Lage des Schienenkopfes mit einer durchgestrichenen Linie dargestellt ist.

Die Verkippung bzw. Verschiebung des Schienenkopfes 6 gegenüber dem Schienenfuß 4 beeinflusst natürlich auch den Abstand der Schienenköpfe eines Gleises, das bekanntlich aus zwei Schienen 3 aufgebaut ist.

Zur Erläuterung letzteren Umstandes dienen die Figuren 5 und 6. In diesen Figuren ist eine in der Praxis verwendete Schablone 9 schraffiert dargestellt. Ist der Schienenkopf 6 genau gegenüber dem Schienenfuß 4 mit seinem Ursprung O ausgerichtet, dann würden der Schienenkopf 6 und der Schienenfuß 4 die Schablone 9 berühren, unabhängig ob die Schablone von rechts gemäß Fig. 5 wie auch von links gemäß Fig. 6 angelegt wird.

In der Fig. 5 ist der Schienenfuß 4 in der gewünschten Position. Der Schienenkopf 6 ist jedoch bezüglich der Längsachse 7 verschoben (durchgezogene dicke Linie). Der Schienenkopf 6 kommt nicht in Anlage an die Schablone 9. Der Schienenkopf 6 ist gegenüber der gewünschten Position (durch eine punktierte Linie dargestellt) durch eine Verschiebung bzw. Verkippung S beabstandet, was einen Spalt S' zum Schienenkopf zur Folge hat.

In der Fig. 6 ist derselbe Formfehler für die Schiene gezeigt, jedoch wird die Schablone 9 von links angelegt. Dies hat zur Folge, dass durch die Verschiebung bzw. Verkippung S von der gewünschten Lage ein Spalt S" zwischen Schablone und Schienenfuß 4 entsteht.

In der Annahme, dass Schienenkopf 6 und Schienenfuß 4 nicht vom geforderten Sollmaß abweichen, ergeben sich beim Anlegen der Schablone 9 von links und von rechts dieselben Spaltwerte für S' und S". Dieser Wert entspricht dann auch genau der gesuchten Verschiebung S. Abweichungen vom Sollmaß beim Schienenfuß 4 und /oder Schienenkopf 6 haben zur Folge, dass für eine angenommenen Schiebung S unterschiedliche Spaltmasse für S' und S" entstehen. In diesem Falle müssen zur genauen händischen Bestimmung der Schiebung S auch die Toleranzfehler von Schienenfuß 6 und Schienenkopf 4 berücksichtigt werden. Diese Operation ist beim erfindungsgemäßen Verfahren nicht erforderlich.

Eine Verkippung liegt übrigens dann vor, wenn die Längsmittelebene 7 nicht senkrecht auf der Basis des Schienenfußes 4 steht. Der Schienensteg 5 ist dabei zusammen mit dem Schienenkopf 6 gegenüber der Senkrechten zum Schienenfuß um einen bestimmten Winkel geneigt.

Ein Verschiebung ist auch dann gegeben, wenn die Längsmittelebene 7 und damit der Schienensteg 5 zusammen mit dem Schienenkopf 6 zwar senkrecht auf dem Schienenfuß 6 stehen, jedoch seitlich versetzt und somit nicht mehr mittig zum Schienenfuß 6 angeordnet sind.

Es sind auch Mischkonstellationen aus einer Verschiebung und Verkippung denkbar. Der Wert S ist lediglich ein Maß für die seitlichen Versatz des Schienenkopfes 6 gegenüber der gewünschten zentralen Lage über dem Schienenfuß 4.

Um die gewünschten Werte zu bestimmen bzw. um während der Produktion kontrollieren zu können, ob sich die gewünschten Werte innerhalb gewisser Toleranzen bewegen, wird nach dem erfindungsgemäßen Verfahren eine berührungslose Messvorrichtung eingesetzt, die in der Walzlinie eingebaut sein kann, und zwar insbesondere am Ende davon. Geeignet dazu sind Laser-Durchmesser-Vorrichtungen bekannter Art, die eingangs angesprochen wurden.

In der Fig. 1 sind zwei derartige Messvorrichtungen schematisch dargestellt, die jeweils einen Laser 1,1' und einen Sensor 2,2' aufweisen. Die Vignolschiene 3 befindet sich innerhalb des von dem Laser ausgeleuchteten Bereichs der beiden Messvorrichtungen. Dies führt zu jeweils zwei Schattenkanten 8 bzw. 8'. Der Abstand dieser Schattenkante 8 bzw. 8' wird vom zugehörigen Sensor 2 bzw. 2' detektiert. Dieser Abstand D der Schattenkanten 8 bzw. 8' wird auch als Durchmesser D bezeichnet.

Die in der Fig. 1 gezeigten beiden Messvorrichtungen sind im Winkel von 90° zueinander angeordnet und drehen sich oszillierend in der Messebene um einen Winkelbereich $\alpha$ von 90°. Die Messebene und die Drehebene bei der in der Fig. 1 gezeigten Darstellung stellt die Papierebene dar.

Bei dem erfindungsgemäßen Verfahren wird laufend der gemessenen Durchmesser D und der dazugehörige Drehwinkel $\alpha$ der Messvorrichtung erfasst. Diese Daten werden einer nicht gezeigten Auswerteeinrichtung zugeführt, welche die gewünschten Maße aus den ermittelten Daten bestimmt.

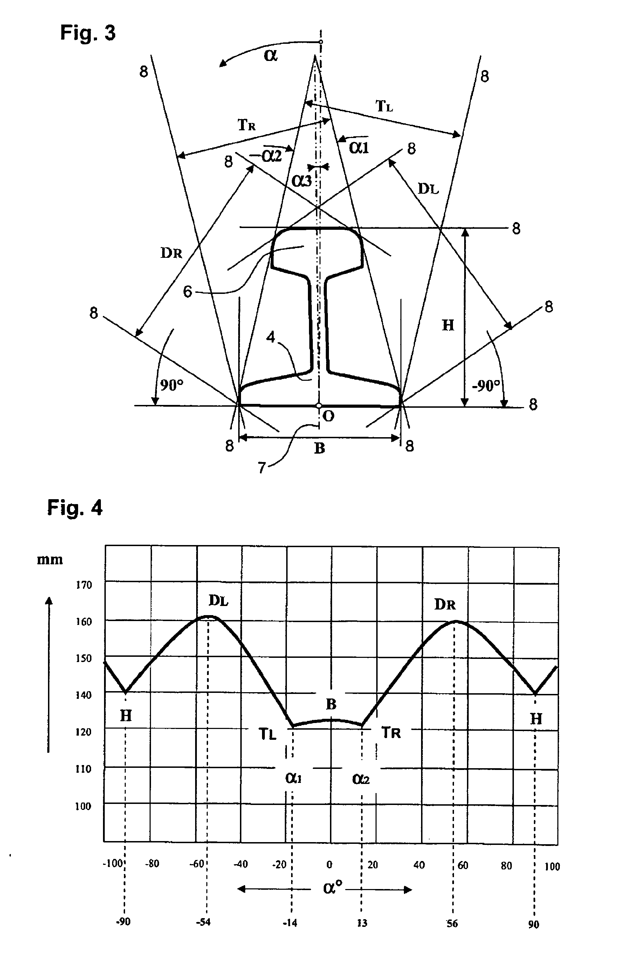

Aus den Daten für die Abstände D und die Winkelstellungen $\alpha$ wird eine Kurve erzeugt, in der die Abstände D gegen die Winkelstellungen $\alpha$ aufgetragen sind. Diese Kurve ist in der Fig. 4 gezeigt. Die Abstände D, welche beim Drehen der Messvorrichtungen bestimmt werden, sind in der Fig. 3 näher graphisch dargestellt.

Die Hauptwerte bzw. Hauptmaße B und H ergeben sich aus den jeweiligen Minimalwerten bei der Winkelstellung $\alpha = 0°$ für B und $\alpha = + 90°$ oder $\alpha = - 90°$ für H. Dabei wird die Winkelstellung $\alpha = +/- 0°$ als diejenige angesehen, welche mit der Längsmittelebene 7 der Schiene 3 zusammenfällt. Die Werte bzw. Maße K und S können nicht direkt bestimmt werden, sondern können nur auf Basis von gemessenen Hilfsgrößen berechnet werden. Diese Hilfsgrößen sind in der Fig. 3 graphisch dargestellt.

Befindet sich eine Messvorrichtung in der Winkelstellung $\alpha = - 90°$, dann wird die Größe bzw. der Wert H und damit die Höhe der Vignolschiene 3 bestimmt. Wird die Messvorrichtung dann von der Winkelstellung $\alpha = - 90°$ in Richtung $\alpha = 0°$ gedreht, dann nimmt der Wert für den Abstand D zu (man vergleiche auch Fig. 4) und erreicht bei einer Winkelstellung $\alpha$ ungefähr - 54° den maximalen Wert $D_L$. Dieser Abstand $D_L$ ist auch in der Fig. 3 gezeigt. In dieser Winkelstellung berühren die Schattenkanten 8 sowohl den Schienenfuß 4 als auch den Schienenkopf 6.

Wird die Messvorrichtung dann weiter gedreht, dann nimmt der Abstand D ab. Bei der Winkelstellung $\alpha$ ungefähr — 14° erreicht der Wert für den Abstand D eine Minimalwert $D = T_L$. Bei dieser Winkelstellung $\alpha_1$ berühren die beiden Schattenkanten 8 immer noch sowohl den Schienekopf 6 als auch den Schienenfuß 4. In der Winkelstellung $\alpha_1$ weist die in der Fig. 4 gezeigte Kurve eine Unstetigkeit auf.

Wird dann weiter gedreht in Richtung $\alpha = 0°$ dann nimmt der Wert für den Abstand D geringfügig zu; die Schattenkanten 8 berühren nur noch den Schienenfuß.

Im weiteren Verlauf des Drehens nimmt der Abstand D bis zu einer Winkelstellung $\alpha$ ungefähr = 0° zu und erreicht ein Maximum; dies entspricht dem Wert B für die Breite des Schienenfußes.

Beim weiteren Drehen in Richtung $\alpha + 90°$ nimmt dann der Abstand D geringfügig ab, bis der Abstand dem Wert $D = T_R$ entspricht. An dieser Stelle entsteht in der Fig. 4 eine Unstetigkeit, welche der Unstetigkeit $D = T_L$ entspricht. Bei dieser Winkelstellung $\alpha$ von ungefähr 13° ( $= \alpha_2$) berühren die Schattenkanten 8 wieder sowohl den Schienenkopf 6 als auch den Schienenfuß 4.

Beim weiteren Drehen in Richtung $\alpha + 90°$ nimmt der Wert für den Abstand D wieder bis zum Maximalwert $D_R$ bei einer Winkelstellung von $\alpha$ ungefähr 56° zu. Dort ergibt sich wieder ein Maximum für den Abstand D.

Wird dann weiter gedreht, dann nimmt der Abstand D wieder ab, bis der Abstand D der Höhe H entspricht (Winkelstellung $\alpha$ ungefähr + 90°).

Obige Beschreibung bezieht sich auf eine Messung mit nur einer Messvorrichtung. Wird diese Messung gemäß den beiden in der Fig. 1 gezeigten Messvorrichtungen durchgeführt, dann befindet sich die erste Messvorrichtung zu Beginn der Messung z.B. in einer Winkelstellung von $\alpha$ — 90°, während sich die andere Messvorrichtung in einer Winkelstellung $\alpha = 0°$ befindet. Der Drehwinkel beträgt dann jeweils nur 90°. Die Drehung erfolgt in oszillierender Weise. Bei einer derartigen Messung wird ebenfalls eine wie in der Fig. 4 gezeigt Kurve erhalten. Die Kurve zeigt dann jedoch die Werte für die Schattenkanten 8 und 8' für die entsprechenden Abstände D.

Bei den oben näher beschriebenen oszillierenden Messungen mit nur einer Messvorrichtung oder mit zwei Messvorrichtungen wird genau genommen über einen Winkelbereich oszillierend gedreht, der größer ist als 90° bzw. 180°, um die weiter oben beschriebenen Messlücken zu vermeiden. Die in der Fig. 4 gezeigten Werte wurden bei einer oszillierenden Drehung von - 100° bis + 100° erhalten. Im Falle einer Messung, bei der die Messvorrichtung(en) kontinuierlich um die Schiene 3 herum gedreht wird, stellt sich eine derartige Problematik natürlich nicht.

Die Fig. 4 zeigt somit den Verlauf der Werte für die Abstände D oder der Schattenwerte der Messung über eine halbe Umdrehung oder mindestens 180°. Werden wie in der Fig. 1 dargestellt zwei Messvorrichtungen eingesetzt, die in 90° zueinander angeordnet sind, dann beträgt der nötige Drehwinkel mindestens 90°.

Wie bereits oben teilweise dargelegt, sind in der Fig. 4, welche den Signalverlauf der Abstände D in Bezug zum Drehwinkel $\alpha$ darstellt, charakteristische Unstetigkeiten und eindeutige Minimal- und Maximalwerte zu erkennen. Diese sind in der nötigen Genauigkeit erfassbar. Aufgrund der eindeutigen geometrischen Zusammenhänge können ausgehend von den Resultaten für die Winkel $\alpha_1$ und $\alpha_2$ die Schieflage oder Verkippung S sowie der Wert bzw. das Maß K für die Breite des Schienenkopfes berechnet werden.

Die charakteristischen Unstetigkeiten im Verlauf für die Abstandswerte D entstehen beim Übergang H in $\alpha = + 90°$ oder $\alpha = - 90°$, wo die Tangente über die Basis "kippt", so dass ein kurzzeitiger Minimalwert für den Durchmesser bzw. den Abstand D erzeugt wird. Vergleichbar ist die Situation für die beiden Winkel $\alpha 1$ und $\alpha 2$, wo die Schattenkanten bzw. Tangenten kurzzeitig den Schienenfuß 4 und den Schienenkopf 6 gleichzeitig berühren. Auch hier ergibt sich ein eindeutiger Wendepunkt in der Messkurve, woraus die beiden gesuchten Winkel $\alpha_1$ und $\alpha_2$ ermittelt werden können.

Aus der Differenz der beiden Winkel $\alpha_1$ und $\alpha_2$ ergibt sich der Winkel $\alpha_3$ (man vergleiche Fig. 3), welcher die Verkippung des Profils in Winkelgrad wiedergibt. Aus der beiden Winkel $\alpha_1$ und $\alpha_2$ und der Höhe H kann die Schiebung S als Längenmaß berechnet werden.

Die Schiebung S kann nach folgendem Algorithmus berechnet werden, wobei in der Fig. 2 die entsprechenden Elemente und Bezeichnungen ersichtlich sind:

$$S = [ (a_1 + a_2) / 2 ] - a_1 \quad = (a_1 + a_2 - 2a_1) / 2$$
$$= (a_2 - a_1) / 2$$

mit $a_1$ = H * tg $\alpha_1$ und a2 = H * tg $\alpha2$ ergibt sich:

$$S = H * ( tg\ \alpha_2 - tg\ \alpha_1 ) / 2$$

a1 = horizontaler Abstand des Schnittpunktes der Schattenkante bei Winkel $\alpha_1$ mit der oberen Schattenkante bei $\alpha$ = 90° von dem Schnittpunkt der Schattenkante bei Winkel $\alpha_1$ mit der unteren Schattenkante bei $\alpha$ = 90°; für a2 gilt Analoges. Der Abstand der oberen Schattenkante bei $\alpha$ = 90° von der unteren Schattenkante bei $\alpha$ = 90° entspricht H.

Das erfindungsgemäße Verfahren kann in Kurzform auch als Verfahren zur optischen Vermessung von Schienen bezeichnet werden.

Bezugszeichenliste

1,1'    Laser

2,2'    Sensor

3       Vignolschiene

4       Schienenfuß

5       Schienensteg

6       Schienenkopf

7       Längsmittelebene

8, 8'   Schattenkanten

9       Schablone

**Patentansprüche**

1. Verfahren zur optischen Bestimmung sowie Berechnung von Geometriedaten einer Schiene (3) mit einem Schienenkopf (6) und einem Schienenfuß (4) sowie mit einem diese verbindenden Schienensteg (5), bei dem die Schiene (3) mit Hilfe einer Messvorrichtung, die

    i. mit einem lichtempfindlichen Sensor (2, 2') und
    ii. mit einer Lichtquelle (1,1') ausgestattet ist, die auf die Schiene (3) gerichtet ist und einen vollständig innerhalb des Messbereichs des Sensors (2, 2') liegenden, von zwei Schattenkanten (8, 8') begrenzten, in einer Messebene liegenden Schatten wirft, wobei die Längsachse der Schiene (3) insbesondere die Normale zu der Messebene bildet, und die

iii. in der Messebene auf einem Kreis um die Schiene (3) um einen Winkelbereich gedreht wird,

vermessen wird,

**dadurch gekennzeichnet, dass**

der Abstand D der beiden Schattenkanten (8, 8') für mehrere Winkelstellungen $\alpha$ bestimmt wird und

aus den für mehrere Winkelstellungen $\alpha$ erhaltenen Daten für die Abstände D und für die Winkelstellungen $\alpha$ eine Kurve erzeugt wird, in der die Abstände D gegen die Winkelstellungen $\alpha$ aufgetragen werden und

aus den Minima, Maxima und Unstetigkeiten der erhaltenen Kurve die folgenden Geometriedaten bestimmt bzw. berechnet werden:

B = Breite des Schienenfußes (4)
H = Höhe der Schiene (3)
S = Verschiebung bzw. Verkippung
K = Breite des Schienenkopfes (6).

2. Verfahren nach Anspruch 1,
**dadurch gekennzeichnet, dass** als Lichtquelle ein Laser (1,1') eingesetzt wird.

3. Verfahren nach Anspruch 1 oder 2,
**dadurch gekennzeichnet, dass**
die Daten für die Abstände D und für die Winkelstellungen $\alpha$ einer Auswerteeinrichtung zugeführt werden, welche die Kurve und die sich daraus ergebenden Geometriedaten berechnet.

4. Verfahren nach einem der Ansprüche 1 bis 3,
**dadurch gekennzeichnet, dass**
die Messvorrichtung kontinuierlich um die Schiene (3) herum oder oszillierend um einen Winkelbereich von mindestens $\alpha$ = - 90° bis $\alpha$ = + 90° und somit um mindestens 180° gedreht wird.

5. Verfahren nach einem der Ansprüche 1 bis 3,
**dadurch gekennzeichnet, dass**
zwei Messvorrichtungen eingesetzt werden, die um 90° zueinander verdreht sind und die entweder kontinuierlich um die Schiene (3) herum oder oszillierend jeweils um einen Winkelbereich von mindestens $\alpha$ = 0° bis mindestens $\alpha$ = + 90° bzw. mindestens $\alpha$ = - 90° bis mindestens $\alpha$ = 0° und somit um mindestens 90° gedreht werden.

6. Verfahren nach einem der vorherigen Ansprüche,
**dadurch gekennzeichnet, dass**
es in einer Walzstrasse durchgeführt wird und die dabei ermittelten Geometriedaten zur Steuerung und Regelung der Walzstrasse eingesetzt werden.

7. Verfahren nach einem der vorherigen Ansprüche,
**dadurch gekennzeichnet, dass**
es bei in Ihrer Längsrichtung vorbewegten Schienen (3) durchgeführt wird.

**Claims**

1. A method for optically determining as well as computing geometric data of a rail (3) having a rail head (6) and a rail base (4), and having a rail web (5) connecting the same, in which the rail (3) is measured by means of a measuring device which is equipped

i. with a light-sensitive sensor (2,2'), and
ii. with a light source (1,1') directed towards the rail (3) and casting a shadow situated completely within the measuring range of the sensor (2,2'), lying in a measuring plane and being delimited by two shadow edges (8,8'), wherein a longitudinal axis of the rail (3) forms in particular a normal to the measuring plane, and which
iii. is rotated in the measuring plane about a circle around the rail (3) by an angular range,
**characterized in that**

the distance D of the two shadow edges (8,8') is determined for several angular positions $\alpha$, and
a curve is generated from the data obtained for several angular positions $\alpha$ for the distances D and the angular positions $\alpha$, in which the distances D are plotted against the angular positions $\alpha$, and
the following geometric data is determined and/or computed from the minima, maxima and discontinuities of the obtained curve:

B = width of rail base (4)
H = height of rail (3)
S = displacement or tilting
K = width of rail head (6).

2. The method according to claim 1, **characterized in that** a laser (1,1') is used as the light source.

3. The method according to claim 1 or 2,
   **characterized in that**
   the data for the distances D and for the angular positions $\alpha$ is supplied to an evaluating device which computes the curve and the geometric data resulting therefrom.

4. The method according to any one of claims 1 to 3,
   **characterized in that**
   the measuring device is rotated continuously about the rail (3) or in an oscillating manner by an angular range from at least $\alpha$ = - 90° to $\alpha$ = + 90° and thus by at least 180°.

5. The method according to any one of claims 1 to 3,
   **characterized in that**
   two measuring devices are used which are rotated by 90° relative to each other and are rotated either continuously about the rail (3) or in an oscillating manner each by an angular range from at least $\alpha$ = 0° to at least $\alpha$ = + 90° or at least $\alpha$ = - 90° to at least $\alpha$ = 0° and thus by at least 90°.

6. The method according to any one of the preceding claims, **characterized in that**
   it is performed in a rolling mill, and the geometric data obtained on this occasion is used for controlling and regulating the rolling mill.

7. The method according to any one of the preceding claims, **characterized in that**
   it is performed with rails (3) advancing in their longitudinal direction.

**Revendications**

1. Procédé de détermination optique ainsi que de calcul de données géométriques d'un rail (3) pourvu d'une tête de rail (6) et d'un pied de rail (4) ainsi que d'une âme de rail (5) reliant ces derniers, dans lequel le rail (3) est mesuré au moyen d'un dispositif de mesure qui

   i. est équipé d'un capteur photosensible (2,2') et
   ii. d'une source lumineuse (1,1') qui est dirigée sur le rail (3) et projette une ombre entièrement située au sein de la plage de mesure du capteur (2,2'), limitée par deux arêtes d'ombre (8,8') et située dans un plan de mesure, l'axe longitudinal du rail (3) formant en particulier la normale par rapport au plan de mesure, et qui
   iii. est tourné d'une plage angulaire autour du rail (3) sur un cercle dans le plan de mesure,
   **caractérisé en ce que**
   l'écartement D des deux arêtes d'ombre (8,8') est déterminé pour plusieurs positions angulaires $\alpha$ et
   à partir des données obtenues pour plusieurs positions angulaires $\alpha$ pour les écartements D et pour les positions angulaires $\alpha$, une courbe dans laquelle les écartements D sont reportés par rapport aux positions angulaires $\alpha$ est générée et
   à partir des minima, maxima et discontinuités de la courbe obtenue, les données géométriques suivantes sont déterminées et/ou calculées :

   B = largeur du pied de rail (4)
   H = hauteur du rail (3)

S = décalage et/ou basculement

K = largeur de la tête de rail (6).

**2.** Procédé selon la revendication 1, **caractérisé en ce que** un laser (1,1') est utilisé comme source lumineuse.

**3.** Procédé selon la revendication 1 ou 2,
**caractérisé en ce que**
les données pour les écartements D et pour les positions angulaires $\alpha$ sont amenées à un dispositif d'évaluation, lequel calcule la courbe et les données géométriques qui en découlent.

**4.** Procédé selon l'une des revendications 1 à 3,
**caractérisé en ce que**
le dispositif de mesure est tourné de façon continue autour du rail (3) ou de façon oscillante d'une plage angulaire d'au moins $\alpha = -90°$ à $\alpha = +90°$ et par conséquent d'au moins 180°.

**5.** Procédé selon l'une des revendications 1 à 3,
**caractérisé en ce que**
deux dispositifs de mesure sont utilisés, qui sont décalés en rotation de 90° l'un par rapport à l'autre et sont tournés soit de façon continue autour du rail (3) soit de façon oscillante respectivement d'une plage angulaire d'au moins $\alpha = 0°$ à au moins $\alpha = +90°$ et/ou d'au moins $\alpha = -90°$ à au moins $= 0°$ et par conséquent d'au moins 90°.

**6.** Procédé selon l'une des revendications précédentes,
**caractérisé en ce que**
il est effectué dans un train de laminage et les données géométriques déterminées à cette occasion sont utilisées pour la commande et la régulation du train de laminage.

**7.** Procédé selon l'une des revendications précédentes,
**caractérisé en ce que**
il est effectué dans le cas de rails (3) qui avancent dans leur direction longitudinale.

**Fig. 1**

**Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2138562 A
- EP 1154226 A
- JP 56117107 A
- WO 20081122385 A3
- DE 4401020